## Europäisches Patentamt

## European Patent Office

## Office européen des brevets

(19)

(11) Veröffentlichungsnummer : **0 075 213 B1**

(12) **EUROPÄISCHE PATENTSCHRIFT**

(45) Veröffentlichungstag der Patentschrift :
**22.01.86**

(51) Int. Cl.⁴ : **G 04 G 1/00, G 02 F 1/13**

(21) Anmeldenummer : **82108335.9**

(22) Anmeldetag : **09.09.82**

(54) **Befestigungs- und Kontaktierungsanordnung für eine LCD-Anzeigeeinheit eines in einem Gehäuse untergebrachten elektronischen Gerätes.**

(30) Priorität : **23.09.81 DE 3137864**

(43) Veröffentlichungstag der Anmeldung :
**30.03.83 Patentblatt 83/13**

(45) Bekanntmachung des Hinweises auf die Patenterteilung : **22.01.86 Patentblatt 86/04**

(84) Benannte Vertragsstaaten :
**AT DE FR GB IT**

(56) Entgegenhaltungen :
**DE-A- 2 635 888**
**DE-A- 2 839 009**
**DE-A- 2 952 370**
**FR-A- 2 344 203**
**FR-A- 2 360 114**
**FR-A- 2 379 087**
**US-A- 4 192 060**
**PATENTS ABSTRACTS OF JAPAN, Band 2, Nr. 58, 26. April 1978, Seite 1552E78**
**PATENTS ABSTRACTS OF JAPAN, Band 2, Nr. 73, 7. Juni 1978, Seite 2788E78**
**PATENTS ABSTRACTS OF JAPAN, Band 6, Nr. 3, 23. Februar 1982**
**Meyers Enzyklopädisches Lexikon, Bd. 9, Fj-Gel, Bibliographisches Institut Mannheim/Wien/Zürich, 1973, S. 168**
**Die Akte enthält technische Angaben, die nach dem Eingang der Anmeldung eingereicht wurden und die nicht in dieser Patentschrift enthalten sind.**

(73) Patentinhaber : **Siemens Aktiengesellschaft Berlin und München Wittelsbacherplatz 2 D-8000 München 2 (DE)**

(72) Erfinder : **Weich, Artur Wettersteinstrasse 12 D-8500 Nürnberg (DE)**

**Beschreibung**

Die Erfindung betrifft eine Befestigungs- und Kontaktierungsanordnung für eine LCD-Anzeigeeinheit eines in einem Gehäuse untergebrachten elektronischen Gerätes, insbesondere einer elektronischen Schaltuhr, wobei zwischen den Kontakten der LCD-Anzeigeeinheit und den ihnen gegenüberliegend angeordneten Kontaktbahnen einer zumindest teilweise im Gehäuse untergebrachten und mit Bauelementen des elektronischen Gerätes bestückten Leiterplatte ein streifenförmiges Gummielement eingelegt ist, das zwischen den Kontaktbahnen der Leiterplatte und den Kontakten der LCD-Anzeigeeinheit zusammengedrückt wird und das einzelne, die Kontaktbahnen der Leiterplatte mit den Kontakten der LCD-Anzeige verbindende Leiter enthält, wobei ein Rahmen zur Aufnahme der LCD-Anzeigeeinheit und des Gummielementes vorgesehen ist, der auf einen Teil der Leiterplatte aufgesetzt ist.

LCD-Anzeigeeinheiten dienen der Sichtbarmachung von Daten. Diese LCD-Anzeigeeinheiten sind üblicherweise streifenförmig ausgebildet und weisen frontseitig ein Sichtfenster auf, während auf der Rückseite Kontakte angeordnet sind, über die die Anzeigeeinheit ansteuerbar ist. Es ist bekannt, bei elektronischen Geräten mit einer LCD-Anzeigeeinheit den Kontaktschluß zwischen ausgangsseitigen Leiterbahnen des elektronischen Gerätes und den Kontakten dieser LCD-Anzeigeeinheit über ein Gummielement herbeizuführen. Ein solches Gummielement, das im folgenden als Leitgummielement bezeichnet wird, ist als elastischer Streifen ausgebildet, in den eine Vielzahl durchgehender, sehr dünner Kontaktstreifen eingebettet ist, so daß jeweils mehrere dieser Kontaktstreifen den Kontakt zwischen einer Kontaktbahn und einem Kontakt der LCD-Anzeigeeinheit herbeiführen. Zur Herbeiführung einer elastischen Anpressung an das Leitgummielement sind Metallfedern bekannt.

Aus der FR-A-2 379 087 ist eine Befestigungs- und Kontaktierungsanordnung der im Oberbegriff des Patentanspruchs 1 genannten Art bekannt. Dabei ist die LCD-Anzeigeeinheit zusammen mit dem Leitgummielement in einem Rahmen untergebracht und auf eine Leiterplatte aufgesetzt. Der Rahmen wird auf der Leiterplatte mit Nieten befestigt.

Aus der FR-A-2 360 114 ist eine Armbanduhr bekannt, bei der durch ein hohles Armband eine flexible Leiterplatte in das Uhrgehäuse geführt ist. Im Bereich des Armbandes ist die Leiterplatte mit Einstellelementen und im Bereich des Uhrgehäuses mit einer LCD-Anzeige verbunden.

Aus der DE-A-2 635 888 ist ein Tastenfeld zur Betätigung elektrischer Geräte bekannt, bei der eine LCD-Anzeigeeinheit über eine flexible Leiterplatte mit der übrigen Schaltung verbunden ist. Die gesamte Anordnung wird durch Nieten zusammengehalten, die die flexible Leiterplatte durchdringen.

Aus der DE-A- 2 839 009 ist ein Halter für eine LCD-Anzeige bekannt, bei dem die LCD-Anzeige in einem Rahmen untergebracht ist und dort durch eine Rastverbindung gehalten wird. Zur Kontaktierung sind federnde Kontaktzungen vorgesehen, die mit Vorspannung gegen die Kontaktstreifen der LCD-Anzeige gedrückt werden. Dies trägt zum sicheren Halt der LCD-Anzeige im Rahmen bei. Auf den Rahmen wird ein die Sicht auf die LCD-Anzeige freigebender Deckel aufgesetzt.

Der Erfindung liegt die Aufgabe zugrunde, eine Befestigungs- und Kontaktierungsanordnung der eingangs genannten Art anzugeben, bei der lediglich ein Minimum an fertigungstechnischem Aufwand erforderlich ist.

Die Aufgabe wird erfindungsgemäß dadurch gelöst, daß eine Wandung des Gehäuses einen Schlitz aufweist, durch den das eine Ende der flexibel ausgebildeten Leiterplatte nach außen geführt ist, daß der Rahmen durch Formschlußelemente, die an die Formschlußelemente angepaßte Ausnehmungen der flexiblen Leiterplatte durchdringen, an der Wandung des Gehäuses festgelegt ist, wobei gegenüber dem Gummielement im Rahmen versetzt angeordnete elastische Glieder der weiteren Abstützung der LCD-Anzeigeeinheit dienen, und daß ein die Sicht auf die LCD-Anzeigeeinheit freigebender Deckel den Anpreßdruck für die Auflage der LCD-Anzeigeeinheit an dem Gummielement und den elastischen Gliedern vermittelt.

Durch den Schlitz in der Wandung des Gehäuses und durch den Einsatz einer flexiblen Leiterplatte werden die für die Funktion der LCD-Anzeigeeinheit wesentlichen Signale über die Leiterbahnen der flexiblen Leiterplatte von außen gut zugänglich. Zur Fixierung der LCD-Anzeigeeinheit und des Leitgummielementes dient der Rahmen, der auf das nach außen geführte Ende der flexiblen Leiterplatte aufgesetzt ist. Die Formschlußelemente dieses Rahmens dienen einerseits dazu, das herausgeführte Ende der flexiblen Leiterplatte unverrückbar festzuhalten und gleichzeitig den Rahmen gegen Verdrehungen und Verschiebungen zu sichern. Die Formschlußelemente können auch so ausgebildet sein, daß der Rahmen durch sie an der Wandung des Gehäuses festgehalten wird. Die LCD-Anzeigeeinheit ist so angeordnet, daß sie mit ihren Kontakten auf dem elastischen Leitgummielement aufliegt, so daß eine erste linienförmige elastische Auflage zustande kommt. Darüber hinaus liegt die LCD-Anzeigeeinheit im Rahmen auf elastischen Gliedern auf, die gegenüber der durch das Leitgummielement vermittelten linien- oder bandförmigen Auflage versetzt angeordnet sind, so daß eine weitere federnde Abstützung der LCD-Anzeigeeinheit zustande kommt. Der die Sicht auf die LCD-Anzeigeeinheit freigebende Deckel drückt von außen her auf diese Einheit und sorgt für ihre Anpressung an das Leitgummielement und die elastischen Glieder. Dadurch wird auch das Leitgummielement an die Leiterbahnen der flexiblen Leiterplatten angepreßt, so daß ein einwandfreier Kontakt gewährleistet ist. Damit kann nach Fertigstellung des elektronischen Gerätes die LCD-Anzeigeeinheit von außen her mit geringem Montageaufwand aufgesetzt werden. Der Deckel kann hierbei an der Wandung des Gehäuses festlegbar sein, beispielsweise durch Verschraubung oder Rastverbindung. In diesem Fall ist es nicht erforderlich, wenngleich vorteilhaft, daß die Formschlußelemente auch die Festhaltung des Rahmens bewirken. Vielmehr ist es ausreichend, wenn durch sie Verschiebungs- und Verdrehungssicherheit herbeigeführt wird. Wenn der Rahmen durch die Formschlußelemente auch bereits an der Wandung des Gehäuses festgehalten wird, kann der Deckel auch im Rahmen selbst befestigt sein.

In einer bevorzugten Ausführungsform ist der Rahmen im wesentlichen kastenförmig ausgebildet. Dabei können die Kastenwände als Anschläge und/oder Auflageflächen für die LCD-Anzeigeeinheit dienen.

Das Gummielement kann in einen schlitzförmigen Durchbruch des Rahmens eingefügt sein. Damit wird das Gummielement bereits durch den Rahmen einwandfrei positioniert und festgehalten.

Eine bevorzugte Ausführungsform besteht darin, daß der schlitzförmige Durchbruch in einer zum Boden des Rahmens senkrecht verlaufenden, gegenüber den übrigen Wandungen des Rahmens verdickten Wandung angebracht ist und daß der die Kontakte aufweisende Teil der LCD-Anzeigeeinheit auf dem schlitzförmigen Durchbruch der verdickten Wandung liegt. Damit ist eine gute Festhaltung und Führung des Leitgummielementes gesichert.

Die im Rahmen angeordneten elastischen Glieder können als Federzungen des Rahmens ausgebildet sein. Gegenüber separat in den Rahmen eingefügten elastischen Gliedern wird damit als Vorteil erreicht, daß diese Art elastischer Glieder unverlierbar und lagefixiert ist.

Eine vorteilhafte Ausführungsform besteht darin, daß die Federzungen Bestandteil des Bodens des Rahmens sind, daß sie parallel zum schlitzförmigen Durchbruch verlaufen und daß der Rahmen relativ zum Schlitz des Gehäuses so angeordnet ist, daß die Federzungen auf den Schlitz zu liegen kommen. Dies ist fertigungstechnisch einfach, da die Federzungen einfach aus dem Boden herausgestanzt sein können. Durch ihre Lage auf dem Schlitz des Gehäuses ist ein erheblicher Federweg möglich, ohne daß die Enden der Federzungen in ihrem Federweg durch die Wandung des Gehäuses begrenzt sind.

Die Formschlußelemente können als Zapfen ausgebildet sein, die durch Löcher der flexiblen Leiterplatte in Löcher der Wandung des Gehäuses eingreifen. Bereits durch zwei solche Zapfen wird sowohl das Ende der flexiblen Leiterplatte als auch der Rahmen gegen Verschiebungen und Verdrehungen gesichert.

Eine vorteilhafte Weiterbildung besteht darin, daß die Zapfen die Löcher der Wandung durchgreifen und eine endseitige Verdickung aufweisen. In diesem Fall wird der Rahmen — und damit auch das Ende der flexiblen Leiterplatte — durch Aufdrücken auf die Wandung des Gehäuses nicht nur gegen Verschiebung und Verdrehung gesichert, sondern auch gleichzeitig zuverlässig festgehalten.

Es ist vorteilhaft, wenn der Deckel durch eine Schnappverbindung gehaltert ist, da durch diese Befestigungsart im Vergleich zu beispielsweise Verschraubung oder Verklebung ein erheblich geringerer Montageaufwand benötigt wird.

Eine besonders belastungsfähige Verbindung wird gewährleistet, wenn die Schnappverbindung zwischen dem Deckel und der Wandung des Gehäuses oder vorstehenden Teilen dieses Gehäuses zustande kommt.

Wenn zur notwendigen Ausstattung des elektronischen Gerätes auch Schalter gehören, besteht eine besonders vorteilhafte Ausführungsform darin, daß der freie Teil des Endes der nach außen geführten, teilweise durch den Rahmen abgedeckten flexiblen Leiterplatte durch eine Schaltmatte überdeckt ist und daß der Deckel den Rahmen und die Schaltmatte überdeckt, wobei die Betätigungselemente der Schaltmatte durch Ausnehmungen des Deckels hindurchragen. Der Einbau von getrennten Schaltern und die zugehörige Leitungsführung können damit eingespart werden.

Im folgenden wird die Erfindung anhand eines in den Figuren 1 bis 6 dargestellten Ausführungsbeispiels näher erläutert. Dabei zeigt :

Figur 1 das Gehäuse einer elektronischen Kleinschaltuhr in perspektivischer Darstellung,

Figur 2 einen Schnitt durch das Gehäuse der elektronischen Kleinschaltuhr mit der erfindungsgemäßen Befestigungs- und Kontaktierungsanordnung entlang der Schnittlinie II-II in Fig. 1,

Figur 3 einen Teil der flexiblen Leiterplatte mit dem aus dem Gehäuseinneren herausgeführten Ende,

Figur 4 den Rahmen zur Aufnahme der LCD-Anzeigeeinheit und des Leitgummielementes in perspektivischer Darstellung,

Figur 5 das Leitgummielement in perspektivischer Darstellung und

Figur 6 die LCD-Anzeigeeinheit in perspektivischer Darstellung.

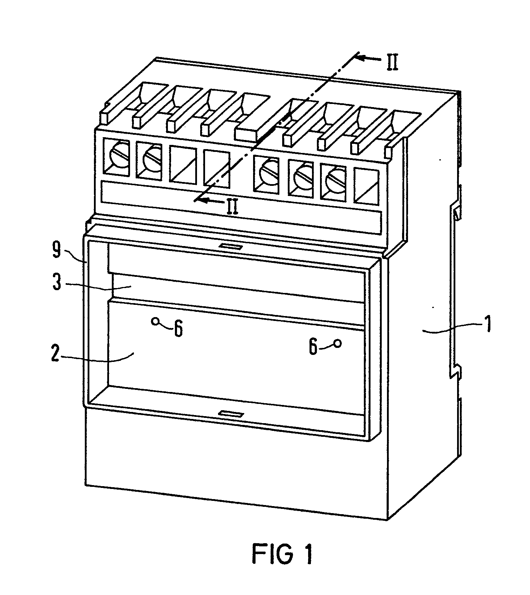

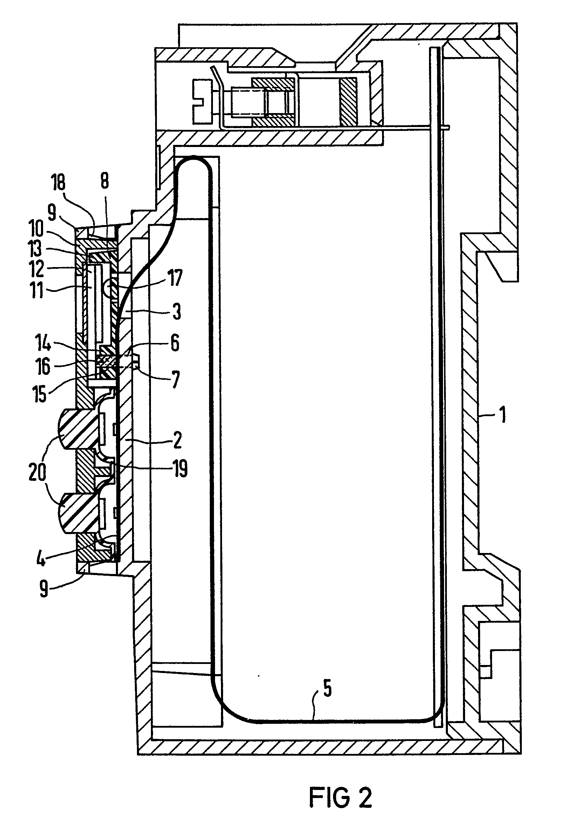

Fig. 1 zeigt das Gehäuse 1 einer elektronischen Kleinschaltuhr in perspektivischer Darstellung. Die frontseitige Wandung 2 weist einen horizontal verlaufenden Schlitz 3 auf, durch den das in Fig. 1 nicht dargestellte Ende 4 der flexiblen Leiterplatte 5 (Fig. 2) vom Gehäuseinneren nach außen geführt wird. Mit dem Bezugszeichen 6 sind in der frontseitigen Wandung 2 die beiden Löcher bezeichnet, in die die Zapfen 7 als Formschlußelemente des Rahmens 8 zur Festlegung des Endes 4 der flexiblen Leiterplatte 5 und des Rahmens 8 eingreifen (Fig. 2). Der rechteckförmig umlaufende Vorsprung 9 stellt einen vorstehenden Teil des Gehäuses 1 dar, der der Schnappbefestigung des Deckels 10 (Fig. 2) am Gehäuse 1 dient.

Der in Fig. 2 dargestellte Schnitt II-II durch das

in Fig. 1 dargestellte Gehäuse 1 sowie durch die erfindungsgemäße Befestigungs- und Kontaktierungsanordnung veranschaulicht die Einzelheiten der Erfindung. In dem Gehäuse 1 ist zumindest ein Teil der elektronischen Komponenten der elektronischen Kleinschaltuhr auf der flexiblen Leiterplatte 5 untergebracht. Das Ende 4 dieser flexiblen Leiterplatte ist durch den Schlitz 3 in der frontseitigen Wandung 2 des Gehäuses 1 so nach außen geführt, daß die Leiterbahnen auf dem Ende 4 der frontseitigen Wandung 2 abgewandt sind. Ein Teil des Endes 4 der flexiblen Leiterplatte 5 wird durch den Rahmen 8 zur Aufnahme der LCD-Anzeigeeinheit gegen die frontseitige Wandung 2 gepreßt. Zu diesem Zweck greifen zwei vom Boden des Rahmens 8 ausgehende Zapfen 7 durch der Form dieser Zapfen entsprechende Öffnungen im Ende 4 der flexiblen Leiterplatte 5 und durch ebenfalls der Form der Zapfen angepaßte Löcher 6 in der frontseitigen Wandung 2 des Gehäuses 1 hindurch. Diese Zapfen 7 sind endseitig verdickt, so daß sie sich vom Inneren des Gehäuses 1 her gegen die frontseitige Wandung abstützen und somit nicht nur den Rahmen 8 verschiebungs- und verdrehungssicher machen, sondern diesen auch gleichzeitig haltern. Alternativ können die Löcher 6 und die Zapfen 7 auch so dimensioniert sein, daß die Befestigung des Rahmens 8 durch einen Preßsitz zwischen Zapfen 7 und Löchern 6 zustande kommt. Mit dem Aufpressen des Rahmens 8 auf die frontseitige Wandung 2 sind somit sowohl dieser Rahmen 8 als auch das Ende 4 der flexiblen Leiterplatte 5 vollkommen festgelegt. Der Rahmen 8 selbst ist im wesentlichen kastenförmig ausgebildet. Das obere Ende 12 der LCD-Anzeigeeinheit 11 liegt an der obenliegenden Wandung 13 des Rahmens 8 an, so daß diese Wandung als Anschlag dient.

Die untere Wandung 14 des Rahmens 8 ist flacher und breiter als die übrigen Wandungen des Rahmens 8. In dieser Wandung ist ein schlitzförmiger Durchbruch 15 vorgesehen, in den ein streifenförmiges Leitgummielement 16 eingefügt ist. Damit wird das Leitgummielement 16 einerseits in seiner Lage fixiert und zum andern gleichzeitig festgehalten. Das Leitgummielement 16 stellt die funktionsgerechte elektrische Verbindung zwischen den Kontakten der LCD-Anzeigeeinheit 11 und den zugewandten Leiterbahnen des Endes 4 der flexiblen Leiterplatte 5 her. Der die Kontakte aufweisende Teil der LCD-Anzeigeeinheit 11 liegt somit über der freien Stirnfläche der verdickten unteren Wandung 14 des Rahmens 8 auf dem über die freie Stirnfläche überstehenden Leitgummielement 16 elastisch auf.

Der spielfreien federnden Abstützung der LCD-Anzeigeeinheit 11 im Inneren des Rahmens 8 dienen zwei senkrecht zur Zeichenebene der Fig. 2 verlaufende Federzungen 17 mit endseitigen Auflagekuppen. Diese Federzungen 12 liegen genau auf dem Schlitz 3 der frontseitigen Wandung 2 des Gehäuses 1, so daß sie in ihrem Federweg durch die Gehäusewandung keine Einschränkung erfahren.

Die Anpressung der LCD-Anzeigeeinheit 11 gegen das Leitgummielement 16 und die als elastische Glieder dienenden Federzungen 17 vermittelt ein Deckel 10, der nach Art einer Schnappverbindung festgelegt ist. Zu diesem Zweck weist der Deckel 10 seitlich sowie oben und unten Rastnasen auf, die in entsprechende Ausnehmungen des rechteckförmig umlaufenden Vorsprunges 9 einrasten.

Wie bereits oben erwähnt, überdeckt der Rahmen 8 nur den oberen Teil des Endes 4 der flexiblen Leiterplatte 5, die nach unten über den Rahmen 8 übersteht. Über den Leiterbahnen des überstehenden Teils des Endes 4 der flexiblen Leiterplatte ist eine Schaltmatte 19 angeordnet, durch die — beispielsweise zum Einstellen der Schaltzeiten der Kleinschaltuhr — Schaltvorgänge ausgelöst werden können. Die Betätigungselemente 20 dieser Schaltmatte 19 ragen durch Ausnehmungen des Deckels 10 hindurch, so daß sie von außen gut zugänglich sind. Damit überdeckt der Deckel 10 sowohl den Rahmen 8 als auch die Schaltmatte 19 und hält die Schaltmatte in ihrer vorgegebenen Lage.

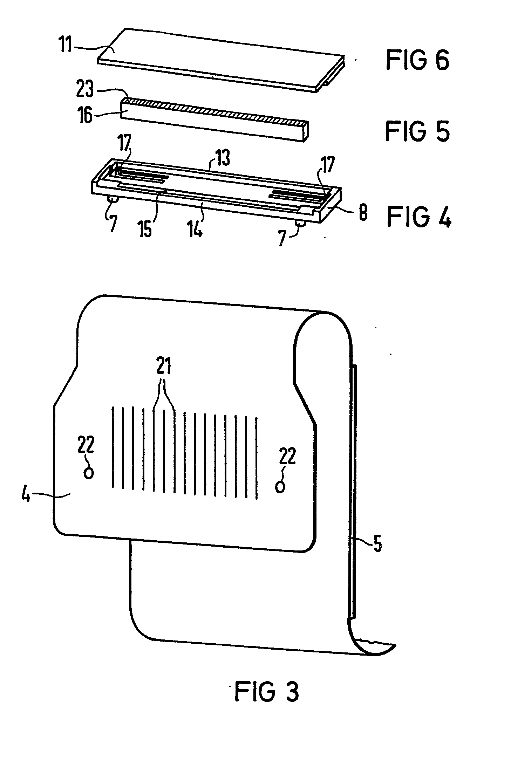

Fig. 3 zeigt einen Teil der flexiblen Leiterplatte sowie deren nach außen geführtes Ende 4. Die Leiterbahnen auf dem Ende 4 der flexiblen Leiterplatte 5, die durch das Leitgummielement 16 kontaktiert sind bzw. für Schaltvorgänge durch die Betätigungselemente 20 der Schaltmatte 19 zur Verfügung stehen, sind mit dem Bezugszeichen 21 belegt. Die an die Form der Zapfen 7 angepaßten Löcher 22 dienen — wie oben bereits erwähnt — zum Festlegen des Endes 4 der flexiblen Leiterplatte.

Fig. 4 zeigt den Rahmen 8 zur Aufnahme des Leitgummielementes 16 sowie der LCD-Anzeigeeinheit 11 in perspektivischer Darstellung. Es ist ersichtlich, daß der Rahmen 8 im wesentlichen kastenförmig ausgebildet ist. Vom Boden des Rahmens 8 stehen nach außen hin die Zapfen 7 ab, die der Lagesicherung und Festhaltung des Rahmens 8 dienen. Parallel zur Längserstreckung des Rahmens 8 ist in der unteren, verdickten Wandung 14 der schlitzförmige Durchbruch 15 zur Aufnahme des Leitgummielementes 16 erkennbar. Parallel zu diesem schlitzförmigen Durchbruch 15, aber versetzt dazu angeordnet, weist der Boden des Rahmens 8 die Federzungen 17 zur Abstützung der LCD-Anzeigeeinheit auf, wobei die Federzungen 17 endseitig mit Auflagekuppen versehen sind.

Fig. 5 zeigt das streifenförmige Leitgummielement 16. Dieses Leitgummielement 16 ist in seiner Form an den schlitzförmigen Durchbruch 15 so angepaßt, daß es — einmal eingefügt — sich selbst hält. Auf der Oberseite des Leitgummielementes 16 sind die von oben nach unten durchgehenden und gegeneinander isolierten Leiterstreifen 23 angedeutet, wobei diese bei dem echten Leitgummielement 16 in einem so kleinen gegenseitigen Abstand angeordnet sind, daß immer mehrere dieser Leiterstreifen 23 auf einer der Kontaktbahnen 21 aufliegen.

Fig. 6 zeigt die LCD-Anzeigeeinheit 11 in perspektivischer Darstellung.

Die Folge der Fig. 3 bis 6 veranschaulicht auch die Abfolge der Montagevorgänge bei der Anbringung der erfindungsgemäßen Befestigungs- und Kontaktierungsanordnung.

**Patentansprüche**

1. Befestigungs- und Kontaktierungsanordnung für eine LCD-Anzeigeeinheit (11) eines in einem Gehäuse (1) untergebrachten elektronischen Gerätes, insbesondere einer elektronischen Schaltuhr, wobei zwischen den Kontakten der LCD-Anzeigeeinheit (11) und den ihnen gegenüberliegend angeordneten Kontaktbahnen einer zumindest teilweise im Gehäuse (1) untergebrachten und mit Bauelementen des elektronischen Gerätes bestückten Leiterplatte (54) ein streifenförmiges Gummielement (16) eingelegt ist, das zwischen den Kontaktbahnen (21) der Leiterplatte (5) und den Kontakten der LCD-Anzeigeinheit (11) zusammengedrückt wird und das einzelne, die Kontaktbahnen (21) der Leiterplatte (5) mit den Kontakten der LCD-Anzeigeeinheit (11) verbindende Leiter (23) enthält, wobei ein Rahmen (8) zur Aufnahme der LCD-Anzeigeeinheit (11) und des Gummielementes (16) vorgesehen ist, der auf einen Teil der Leiterplatte (5) aufgesetzt ist, dadurch gekennzeichnet, daß eine Wandung (2) des Gehäuses (1) einen Schlitz (3) aufweist, durch den das eine Ende (4) der flexibel ausgebildeten Leiterplatte (5) nach außen geführt ist, daß der Rahmen (8) durch Formschlußelemente (7), die an die Formschlußelemente (7) angepaßte Ausnehmungen (22) der flexiblen Leiterplatte (5) durchdringen, an der Wandung (2) des Gehäuses (1) festgelegt ist, wobei gegenüber dem Gummielement (16) im Rahmen (8) versetzt angeordnete elastische Glieder (17) der weiteren Abstützung der LCD-Anzeigeeinheit (11) dienen, und daß ein die Sicht auf die LCD-Anzeigeeinheit (11) freigebender Deckel (10) den Anpreßdruck für die Auflage der LCD-Anzeigeeinheit (11) an dem Gummielement (16) und den elastischen Gliedern (17) vermittelt.

2. Befestigungs- und Kontaktierungsanordnung nach Anspruch 1, dadurch gekennzeichnet, daß der Rahmen (8) im wesentlichen kastenförmig ausgebildet ist.

3. Befestigungs- und Kontaktierungsanordnung nach Anspruch 2, dadurch gekennzeichnet, daß das Gummielement (16) in einen schlitzförmigen Durchbruch (15) des Rahmens (8) eingefügt ist.

4. Befestigungs- und Kontaktierungsanordnung nach Anspruch 3, dadurch gekennzeichnet, daß der schlitzförmige Durchbruch (15) in einer zum Boden des Rahmens (8) senkrecht verlaufenden, gegenüber den übrigen Wandungen des Rahmens verdickten Wandung (14) angebracht ist und daß der die Kontakte aufweisende Teil der LCD-Anzeigeeinheit (11) auf dem schlitzförmigen Durchbruch der verdickten Wandung (14) liegt.

5. Befestigungs- und Kontaktierungsanordnung nach einem der Ansprüche 1 bis 4, dadurch gekennzeichnet, daß die im Rahmen (8) angeordneten elastischen Glieder (17) als Federzungen des Rahmens (8) ausgebildet sind.

6. Befestigungs- und Kontaktierungsanordnung nach einem der Ansprüche 1 bis 5, dadurch gekennzeichnet, daß die Federzungen Bestandteil des Bodens des Rahmens (8) sind, daß sie parallel zum schlitzförmigen Durchbruch (15) verlaufen und daß der Rahmen (8) relativ zum Schlitz (3) des Gehäuses (1) so angeordnet ist, daß die Federzungen auf den Schlitz (3) zu liegen kommen.

7. Befestigungs- und Kontaktierungsanordnung nach einem der Ansprüche 1 bis 6, dadurch gekennzeichnet, daß die Formschlußelemente (7) als Zapfen ausgebildet sind, die durch Löcher (22) der flexiblen Leiterplatte (5) in Löcher (6) der Wandung (2) des Gehäuses (1) eingreifen.

8. Befestigungs- und Kontaktierungsanordnung nach Anspruch 7, dadurch gekennzeichnet, daß die Zapfen die Löcher (6) der Wandung (2) durchgreifen und eine endseitige Verdickung aufweisen.

9. Befestigungs- und Kontaktierungsanordnung nach einem der Ansprüche 1 bis 8, dadurch gekennzeichnet, daß der Deckel (10) durch eine Schnappverbindung (18) gehaltert ist.

10. Befestigungs- und Kontaktierungsanordnung nach Anspruch 9, dadurch gekennzeichnet, daß die Schnappverbindung (18) zwischen dem Deckel (10) und der Wandung (2) des Gehäuses (1) oder vorstehenden Teilen (9) dieses Gehäuses (1) zustande kommt.

11. Befestigungs- und Kontaktierungsanordnung nach einem der Ansprüche 1 bis 10, dadurch gekennzeichnet, daß der freie Teil des Endes (4) der nach außen geführten, teilweise durch den Rahmen (8) abgedeckten flexiblen Leiterplatte (5) durch eine Schaltmatte (19) überdeckt ist und daß der Deckel (10) den Rahmen (8) und die Schaltmatte (19) überdeckt, wobei die Betätigungselemente (20) der Schaltmatte (19) durch Ausnehmungen des Deckels (10) hindurchragen.

**Claims**

1. A mounting and contacting arrangement for an LCD display unit (11) of an electronic apparatus, in particular an electronic time switch, which is accommodated in a housing (1), wherein, between the contacts of the LCD display unit (11) and the contact paths, arranged opposite thereto, of a printed circuit board (5) which is at least partially accommodated in the housing (1) and equipped with components of the electronic apparatus, there is inserted a strip-shaped rubber element (16) which is compressed between the contact paths (21) of the printed circuit board (5) and the contacts of the LCD display unit (11) and which comprises individual conductors (23) which connect the printed circuit board (5) to the contacts of the LCD display unit (11), and wherein a frame (8) is provided which serves to house the LCD display unit (11) and the rubber element (16) and which is mounted on a part of the printed circuit board (5), characterised in that one wall (2) of the housing (1) has a slot (3) through which one end (4) of the flexible printed circuit board (5) passes towards the outside ; that the frame (8) is fixed on the wall (2) of the housing (1) by form-locking elements (7) which pass through apertures (22) in the flexible printed circuit board (5) which are matched to the form-locking elements (7), elastic members (17) which are staggered in relation to the rubber element (16) in the frame (8) serving further to support the LCD display unit (11) ; and that a cover (10) which gives a view of the LCD display unit (11), provided the contact pressure for the support of the LCD display unit (11) on the rubber element (16) and the elastic members (17).

2. A mounting and contacting arrangement as claimed in Claim 1, characterised in that the frame (8) is essentially box-shaped.

3. A mounting and contacting arrangement as claimed in Claim 2, characterised in that the rubber element (16) is inserted into a slot-shaped opening (15) in the frame (8).

4. A mounting and contacting arrangement as claimed in Claim 3, characterised in that the slot-shaped opening (15) is arranged in a wall (14) which extends at right angles to the base of the frame (8) and which is thicker relative to the remaining walls of the frame ; and that the part of the LCD display unit (11) which carries the contacts lies on the slot-shaped opening of the thicker wall (14).

5. A mounting and contacting arrangement as claimed in one of Claims 1 to 4, characterised in that the elastic members (17) which are arranged in the frame (8), are designed as spring tongues of the frame (8).

6. A mounting and contacting arrangement as claimed in one of Claims 1 to 5, characterised in that the spring tongues form a part of the base of the frame (8) ; that they extend parallel to the slot-shaped opening (15) ; and that the frame (8) is arranged relative to the slot (3) of the housing (1) in such a way that the spring tongues lie on the slot (3).

7. A mounting and contacting arrangement as claimed in one of Claims 1 to 6, characterised in that the form-locking elements (7) are designed as pins which engage through openings (22) in the flexible printed circuit board (5) into openings (6) in the wall (2) of the housing (1).

8. A mounting and contacting arrangement as claimed in Claim 7, characterised in that the pins pass through the openings (6) of the wall (2) and have a thickening at the end.

9. A mounting and contacting arrangement as claimed in one of Claims 1 to 8, characterised in that the cover (10) is held by a snap connection (18).

10. A mounting and contacting arrangement as claimed in Claim 9, characterised in that the snap connection (18) is established between the cover (10) and the wall (2) of the housing (1), or protruding parts (9) of the housing (1).

11. A mounting and contacting arrangement as claimed in one of Claims 1 to 10, characterised in that the free part of the end (4) of the flexible printed circuit board (5) which is led towards the outside and partially covered by the frame (8), is covered by a switching mat (19), and that the cover (10) covers the frame (8) and the switching mat (19), the operating elements (20) of the switching mat (19) passing through apertures in the cover (10).

**Revendications**

1. Dispositif de fixation et d'établissement de contacts pour une unité d'affichage à cristal liquide (11) d'un appareil électronique logé dans un boîtier (1), notamment d'une minuterie électronique, et dans lequel entre les contacts de l'unité d'affichage à cristal liquide (11) et les pistes de contact, disposées en vis-à-vis de ces contacts, d'une plaquette à circuits imprimés (5) logée au moins en partie dans le boîtier (1) et équipée de composants de l'appareil électronique, se trouve inséré un organe en caoutchouc en forme de bande (7), qui est comprimé entre les pistes de contact (21) de la plaquette à circuits imprimés (5) et les contacts de l'unité d'affichage à cristal liquide (11) et qui contient différents conducteurs (23) reliant les pistes de contact (21) de la plaquette à circuits imprimés (5) aux contacts de l'unité d'affichage à cristal liquide (11), et dans lequel il est prévu un cadre (8) servant à recevoir l'unité d'affichage à cristal liquide (11) et l'organe en caoutchouc (16) et qui est montée sur une partie de la plaquette à circuits imprimés (5), caractérisé par le fait qu'une paroi (2) du boîtier (1) comporte une chambre (3) à travers laquelle une extrémité (4) de la plaquette à circuits imprimés (5) réalisée de manière à être flexible s'étend vers l'extérieur, que le cadre (8) est fixé à la paroi (2) du boîtier (1) par l'intermédiaire d'organes de liaison par formes complémentaires (7), qui s'engagent dans des évidements (22), adaptés aux organes de liaison par formes complémentaires (7), de la plaquette à circuits imprimés (5) flexible, auquel cas des organes élastiques (17) disposés en étant décalés par rapport à l'organe en caoutchouc (16) dans le cadre (8) servent à réaliser le soutien complémentaire de l'unité d'affichage à cristal liquide (11), et un couvercle (10), qui autorise la visibilité de l'unité d'affichage à cristal liquide (11), transmet la pression d'application servant à repousser l'unité d'affichage à cristal liquide (11) contre l'organe en caoutchouc (16) et contre les organes élastiques (17).

2. Dispositif de fixation et d'établissement de contacts suivant la revendication 1, caractérisé par le fait que le cadre (8) est réalisé essentiellement sous la forme d'une boîte.

3. Dispositif de fixation et d'établissement de contacts suivant la revendication 2, caractérisé par le fait que l'organe en caoutchouc (16) est inséré dans une ouverture en forme de fente (4) du cadre (8).

4. Dispositif de fixation et d'établissement de contacts suivant la revendication 3, caractérisé par le fait que l'ouverture en forme de fente (15) est ménagée dans une paroi (14) s'étendant perpendiculairement à la base du cadre (8) et épaissie par rapport aux autres parois du cadre et que la partie de l'unité d'affichage à cristal liquide (11), qui comporte les contacts, est située devant l'ouverture en forme de fente de la paroi épaissie (14).

5. Dispositif de fixation et d'établissement de contacts suivant l'une des revendications 1 à 4, caractérisé par le fait que les organes élastiques (17) montés dans le cadre (8) sont réalisés sous la forme de languettes élastiques du cadre (8).

6. Dispositif de fixation et d'établissement de contacts suivant l'une des revendications 1 à 5, caractérisé par le fait que les languettes élastiques font partie de la base du cadre (8), qu'elles s'étendent parallèlement à l'ouverture en forme de fente (15) et que le cadre (8) est disposé par rapport à la fente (3) du boîtier (1) de manière que les languettes élastiques viennent se situer dans la fente (3).

7. Dispositif de fixation et d'établissement de contacts suivant l'une des revendications 1 à 6, caractérisé par le fait que les organes de liaison par formes complémentaires (7) sont réalisés sous la forme de tétons qui s'engagent, à travers des trous (22) de la plaquette à circuits imprimés (5) flexible, dans des trous (6) de la paroi (2) du boîtier (1).

8. Dispositif de fixation et d'établissement de contacts suivant la revendication 7, caractérisé par le fait que les tétons traversent les trous (6) de la paroi (2) et possèdent un épaississement terminal.

9. Dispositif de fixation et d'établissement de contacts suivant l'une des revendications 1 à 8, caractérisé par le fait que le couvercle (10) est maintenu par une liaison à encliquetage brusque (18).

10. Dispositif de fixation et d'établissement de contacts suivant la revendication 9, caractérisé par le fait que la liaison à encliquetage brusque (18) est prévue entre le couvercle (10) et la paroi (2) du boîtier (1) ou des parties avant (9) de ce boîtier (1).

11. Dispositif de fixation et d'établissement de contacts suivant l'une des revendications 1 à 10, caractérisé par le fait que la partie libre de l'extrémité (4) de la plaquette à circuits imprimés (5) flexible, ressortie à l'extérieur et recouverte partiellement par le cadre (8), est recouverte par une plaque de connexion (19), les organes d'actionnement (20) de la plaque de connexion (19) faisant saillie à travers des évidements du couvercle (10).

**FIG 1**

FIG 2

FIG 6

11

23
16

FIG 5

17 13 17

7 15 14 7 8

FIG 4

21

22 22

4

5

FIG 3

3